# FASCICULE DE BREVET EUROPEEN

(11) **EP 3 911 872 B1**
(45) Date de publication et mention de la délivrance du brevet: **01.03.2023**
(21) Numéro de dépôt: 20701021.6
(22) Date de dépôt: 16.01.2020
(51) Int. Cl.: F16H 1/22, H02K 7/116, F16H 57/02

(54) **SYSTÈME D'ENTRAÎNEMENT MÉCANIQUE ET MOTOCOMPRESSEUR ASSOCIÉ**
MECHANISCHES ANTRIEBSSYSTEM UND ZUGEHÖRIGER MOTORVERDICHTER
MECHANICAL DRIVE SYSTEM AND ASSOCIATED MOTOR COMPRESSOR

(30) Priorité: 18.01.2019 FR 1900469
(43) Date de publication de la demande: 24.11.2021
(73) Titulaire: GE Energy Power Conversion Technology Ltd, RUGBY Warwickshire CV21 1BD (GB)
(72) Inventeur: GALMICHE, Christophe, 54250 CHAMPIGNEULLES (FR)
(74) Mandataire: Serjeants LLP
(86) Numéro de dépôt international: PCT/EP2020/050996
(87) Numéro de publication internationale: WO 2020/148370

(56) Documents cités:
- EP-A1- 2 964 976
- EP-A1- 3 357 731
- JP-A- S5 718 840
- JP-A- 2006 238 590
- US-A1- 2013 300 236
- US-A1- 2018 019 644

## Description

La présente invention concerne les systèmes d'entraînement mécanique comprenant au moins une machine électrique tournante comprenant un rotor sans arbre traversant.

La présente invention concerne également un motocompresseur comprenant un tel système d'entraînement.

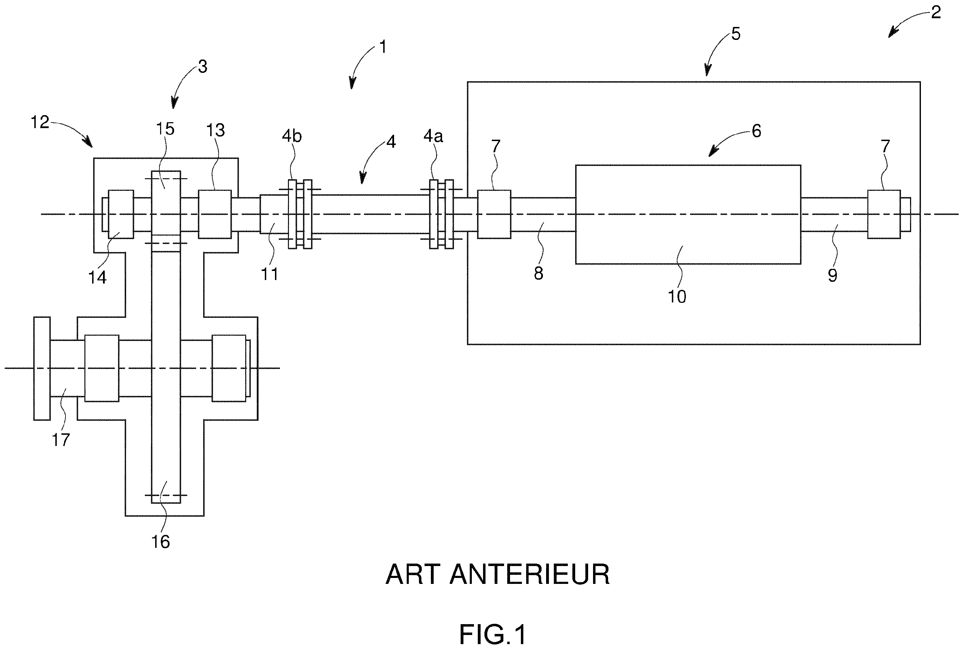

La figure 1 illustre un exemple du système d'entraînement 1 selon l'art antérieur comprenant une machine électrique tournante 2 reliée à une boîte de transfert 3 par un arbre d'accouplement 4.

La machine électrique tournante 2 comporte une carcasse 5 et un rotor 6 à arbre non traversant de sorte que la vitesse périphérique du rotor 6 peut être supérieure à 200 m/s.

Le rotor 6 est maintenu dans la carcasse 5 par l'intermédiaire de deux paliers 7, et comprend deux demi-arbres 8 et 9 enserrant une masse magnétique 10.

Le demi-arbre 8 est relié à une première extrémité de l'arbre d'accouplement 4 par l'intermédiaire d'un premier dispositif d'accouplement flexible 4a.

Un deuxième dispositif d'accouplement flexible 4b relie l'arbre d'accouplement à un arbre d'entrée 11 incorporé dans un carter 12 de la boîte de transfert 3.

Des paliers 13 et 14 maintiennent l'arbre d'entrée dans le carter 12.

Une roue dentée motrice 15 est montée sur l'arbre d'entrée 11 entre les deux paliers 13 et 14, et est engrenée avec une roue dentée entraînée 16 montée sur un arbre de sortie 17 de la boîte de transfert 3.

L'arbre d'accouplement 4, les dispositifs d'accouplement flexible 4a et 4b, le rotor 6, les paliers 7, 13 et 14, l'arbre d'entrée 11 et la roue dentée motrice 15 forment une ligne de transmission motrice.

Selon le diamètre des roues dentées motrice et entraînée, la vitesse et/ou le couple de l'arbre de sortie 17 est plus élevée ou plus basse que la vitesse du rotor 6.

Le système 1 est en outre configuré pour transfert un couple important sur l'arbre de sortie 17.

Comme le demi-arbre 8 et l'arbre d'entrée 11 ne sont pas à la même température lors du fonctionnement du système 1, les dilatations thermiques du demi-arbre 8 et de l'arbre d'entrée 11 provoquent des déformations compensées par les dispositifs d'accouplement flexible 4a et 4b.

Cependant, l'intégration des dispositifs d'accouplement flexible 4a et 4b nécessite la présence de l'arbre d'accouplement 4 et un dimensionnement suffisant des paliers 7 et 13 pour maintenir l'arbre 4 et les dispositifs 4a et 4b, ce qui augmente la masse et l'encombrement du système 1, notamment dans la direction axiale de la ligne de transmission motrice.

En outre, comme les dispositifs 4a et 4b sont flexibles, ils dissipent de l'énergie et dégradent le rendement global du système 1.

De plus, comme la machine électrique tournante 2 et la boîte de transfert 3 sont séparées par l'arbre 4, les dispositifs 4a et 4b compensent en outre les défauts de coaxialité du demi-arbre 8 et de l'arbre d'entrée 11.

On pourra se référer aux documents US9059607, US2016/099632, JP2006238590, WO2016/162892, US2017/0114640, US8779645 et WO2018/130420 qui divulguent une machine électrique tournante comprenant un arbre rotorique d'un seul tenant sur lequel est rapportée une roue dentée.

Cependant, comme l'arbre rotorique est d'un seul tenant, selon les dimensions de l'arbre, notamment sa longueur, il est difficile et coûteux d'usiner, de manipuler et de transporter un tel arbre afin d'y rapporter une roue dentée, notamment sur des machines électriques tournantes de forte puissance dépassant par exemple les 5000 kW.

De plus, comme l'arbre est traversant, c'est-à-dire traversant la masse magnétique du rotor, la vitesse périphérique du rotor est limitée à 200 m/s afin d'éviter des contraintes trop importantes dans la partie trouée de la masse magnétique au contact de l'arbre traversant sous l'effet de la force centrifuge lorsque le rotor est en rotation.

Les documents EP1111759 et EP2811625 divulguent une machine électrique tournante comprenant un rotor comprenant deux demi-arbres visés entre eux et traversant une masse magnétique. La roue dentée motrice est rapportée ou usinée sur l'un des demi-arbres.

Cependant, l'arbre rotorique sur lequel est rapportée la roue dentée est creux, de sorte que la valeur du couple transmis est limitée.

De plus, comme l'arbre de la machine est traversant, la vitesse périphérique du rotor creux est limitée à 200 m/s afin d'éviter des contraintes trop importantes dans la masse magnétique creuse sous l'effet de la force centrifuge lorsque le rotor est en rotation.

On pourra en outre se référer aux documents EP2964976 et EP1319866 qui divulguent une boîte de transfert comprenant deux entrées reliées chacune à un arbre rotorique d'une machine électrique tournante différente.

Cependant, comme les arbres rotoriques sont traversant, la vitesse périphérique du rotor est également limitée à 200 m/s. Un autre exemple est décrit dans le document US2018/019644.

Il est donc proposé de pallier tout ou partie des inconvénients des systèmes d'entraînement mécanique selon l'état de la technique, notamment en diminuant la masse et l'encombrement desdits systèmes, en augmentant le couple transmis et la vitesse de rotation de la machine électrique tournante incorporée dans lesdits systèmes et en augmentant le rendement global et la puissance desdits systèmes.

Au vu de ce qui précède, il est proposé un système d'entraînement mécanique comprenant un châssis, au moins une machine électrique tournante comprenant un rotor à arbre non traversant disposée sur le châssis, et au moins une boîte de transfert comportant au moins une roue dentée motrice.

La roue dentée motrice est solidaire d'un arbre rotorique de la machine électrique tournante, la boîte de transfert étant disposée sur le châssis.

Selon l'invention le rotor à arbre non traversant comporte une masse magnétique cylindrique enserrée entre deux demi-arbres, les demi-arbres formant l'arbre rotorique.

De préférence, le demi-arbre et la roue dentée motrice sont réalisés d'un seul tenant.

Avantageusement, la boîte de transfert comprend un carter formé par des éléments du châssis de sorte que la boîte de transfert soit intégrée dans le châssis.

De préférence, la boîte de transfert comprend en outre au moins une roue dentée entraînée reliée à un arbre de sortie de ladite boîte, la roue dentée entraînée étant engrenée avec la roue dentée motrice, un plan des axes de rotation de la roue dentée motrice et de la roue dentée entraînée forme un angle avec la base du châssis compris entre 30° et 60°.

Avantageusement, la boîte de transfert comprend en outre au moins deux roues dentées entraînées reliées chacune à un arbre de sortie de ladite boîte, chacune des roues dentées entraînées étant engrenée avec la roue dentée motrice.

Selon une autre caractéristique, le système d'entraînement mécanique comprend en outre une deuxième boîte de transfert disposée sur la base du châssis, la deuxième extrémité du rotor comportant la roue dentée motrice de la deuxième boîte de transfert.

Selon encore une autre caractéristique, le système d'entraînement mécanique comprend une deuxième machine électrique tournante comprenant un rotor à arbre non traversant disposée sur la base du châssis, au moins une extrémité d'un arbre rotorique de la deuxième machine électrique tournante comportant une deuxième roue dentée motrice de la boîte de transfert.

De préférence, la boîte de transfert comprend en outre au moins une roue dentée entraînée reliée à un arbre de sortie de ladite boîte, la roue dentée entraînée étant engrenée avec les roues dentées motrices, un premier plan des axes de rotation de la roue dentée motrice et de la roue dentée entraînée, et un deuxième plan des axes de rotation de la deuxième roue dentée motrice et de la roue dentée entraînée forment respectivement un angle avec la base du châssis compris entre 30° et 60°.

Selon une autre caractéristique, le système d'entraînement mécanique comprend une deuxième boîte de transfert similaire à la première boîte de transfert, les extrémités libres des demi-arbres des rotors des machines électriques tournantes étant chacune pourvue d'une roue dentée motrice entraînant un arbre de sortie de la deuxième boîte de transfert.

Avantageusement, les roues dentées sont droites de manière à former des engrenages parallèles.

De préférence, les roues dentées sont coniques de manière à former des engrenages concourants.

Selon une autre caractéristique, un axe de rotation de chaque roue dentée motrice et un axe de rotation de chaque roue dentée entraînée sont perpendiculaires.

De préférence, un axe de rotation de chaque roue dentée motrice et un axe de rotation de chaque roue dentée entraînée forment un angle compris entre 5° et 45°, de préférence compris entre 10° et 30°

Avantageusement, chaque machine électrique tournante et chaque boîte de transfert sont disposées dans un caisson étanche différent formé par le châssis.

De préférence mais non revendiqué, la machine électrique tournante est du type asynchrone à cage d'écureuil ou à rotor bobiné, ou du type synchrone, de préférence à rotor bobiné.

Selon un autre aspect, il est proposé un motocompresseur comprenant un système d'entraînement mécanique tel que défini précédemment, entraînant une section de compression du motocompresseur.

D'autres caractéristiques et avantages de l'invention apparaîtront à la lecture de la description qui suit de modes de réalisation de l'invention, donnés uniquement à titre d'exemples non limitatifs et en référence aux dessins sur lesquels :
[Fig 1] dont il a déjà été fait mention, illustre un système d'entraînement mécanique comprenant une machine électrique tournante à rotor non traversant selon l'état de la technique ;
[Fig 2]
[Fig 3] illustrent un premier mode de réalisation d'un système d'entraînement mécanique selon l'invention ;
[Fig 4] illustre un deuxième mode de réalisation du système d'entraînement mécanique selon l'invention ;
[Fig 5] illustre un troisième mode de réalisation du système d'entraînement mécanique selon l'invention ;
[Fig 6]

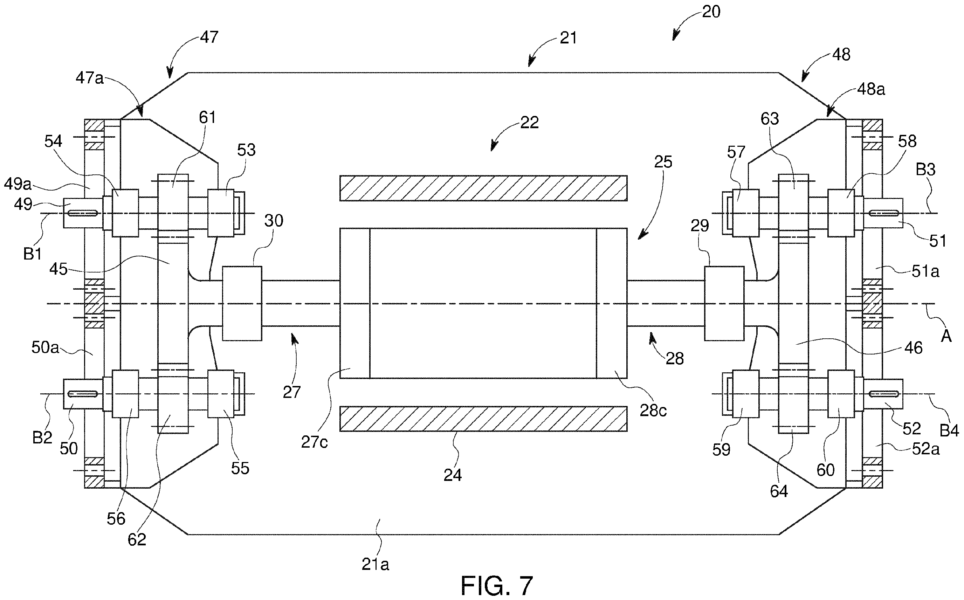

[Fig 7] illustrent un quatrième mode de réalisation du système d'entraînement mécanique selon l'invention ;
[Fig 8]

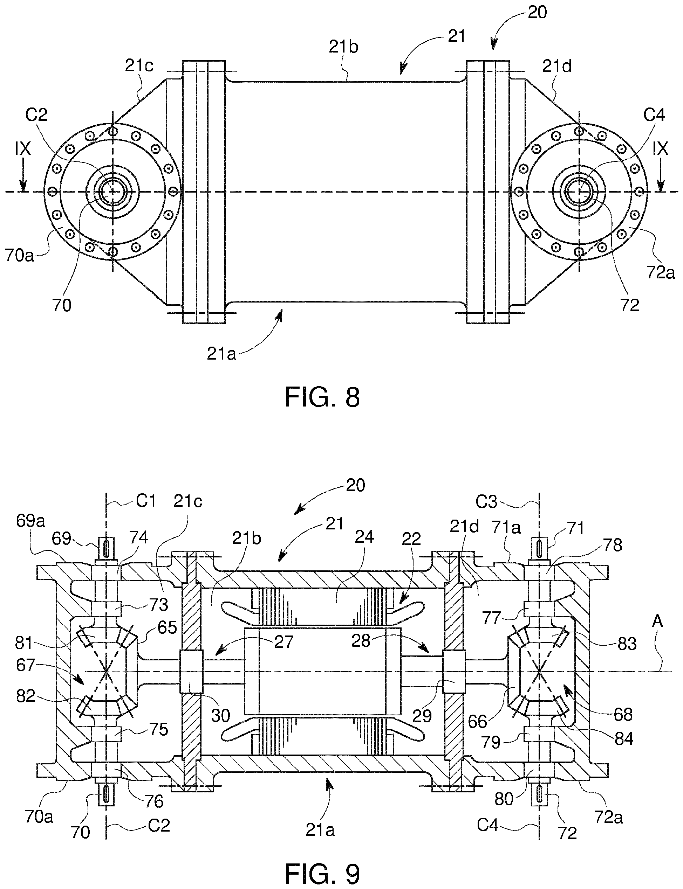

[Fig 9] illustrent un cinquième mode de réalisation du système d'entraînement mécanique selon l'invention ;
[Fig 10]

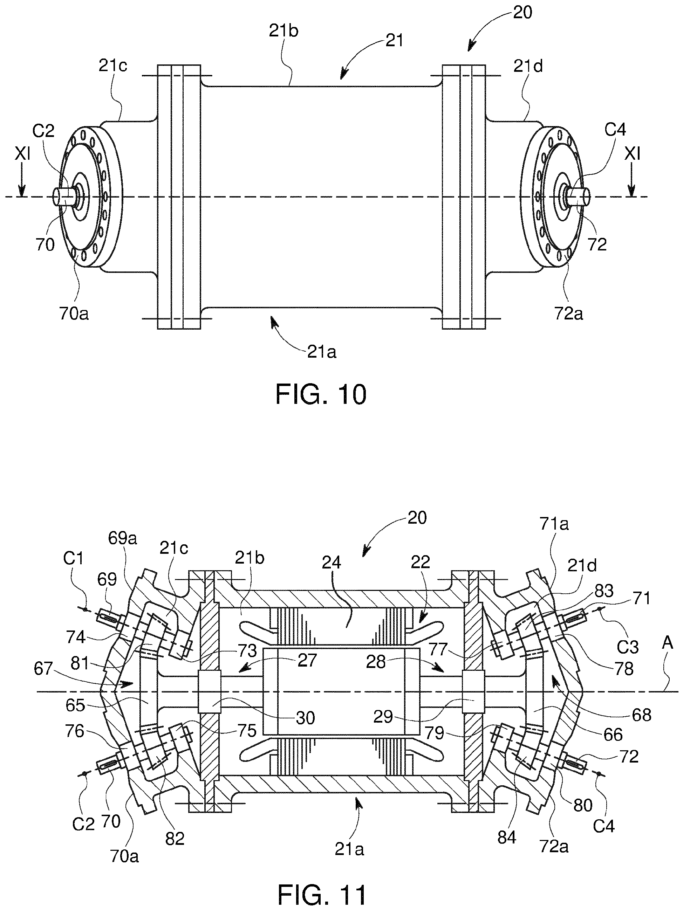

[Fig 11] illustrent un sixième mode de réalisation du système d'entraînement mécanique selon l'invention ;

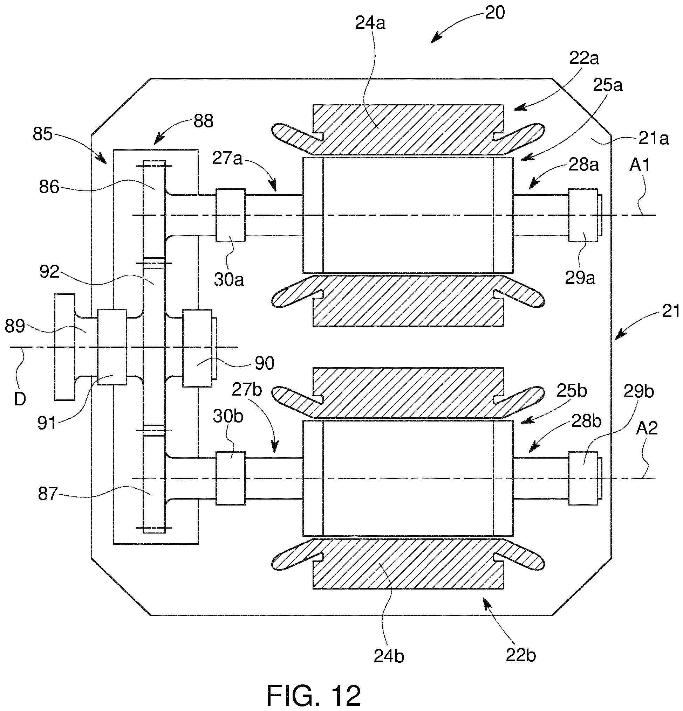

[Fig 12] illustre un septième mode de réalisation du système d'entraînement mécanique selon l'invention ;

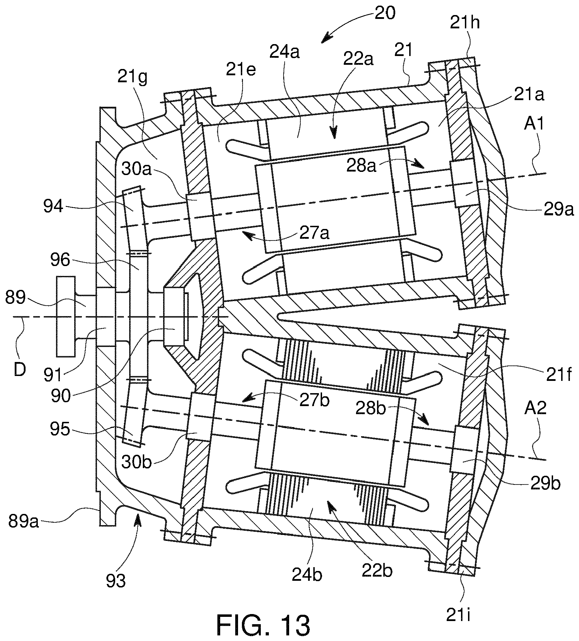

[Fig 13] illustre un huitième mode de réalisation du système d'entraînement mécanique selon l'invention ; et

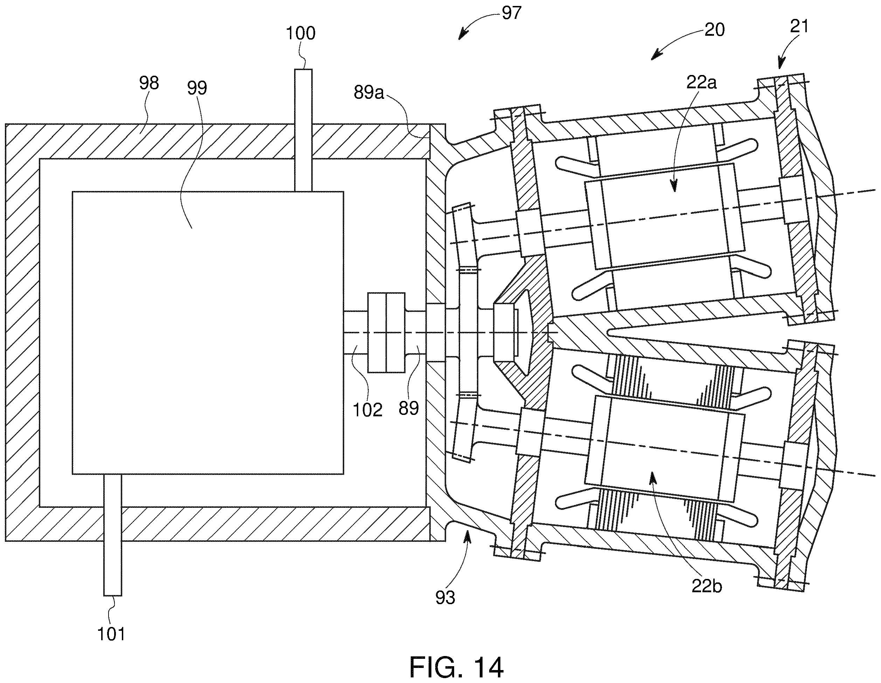

[Fig 14] illustre un mode de réalisation d'un motocompresseur selon l'invention.

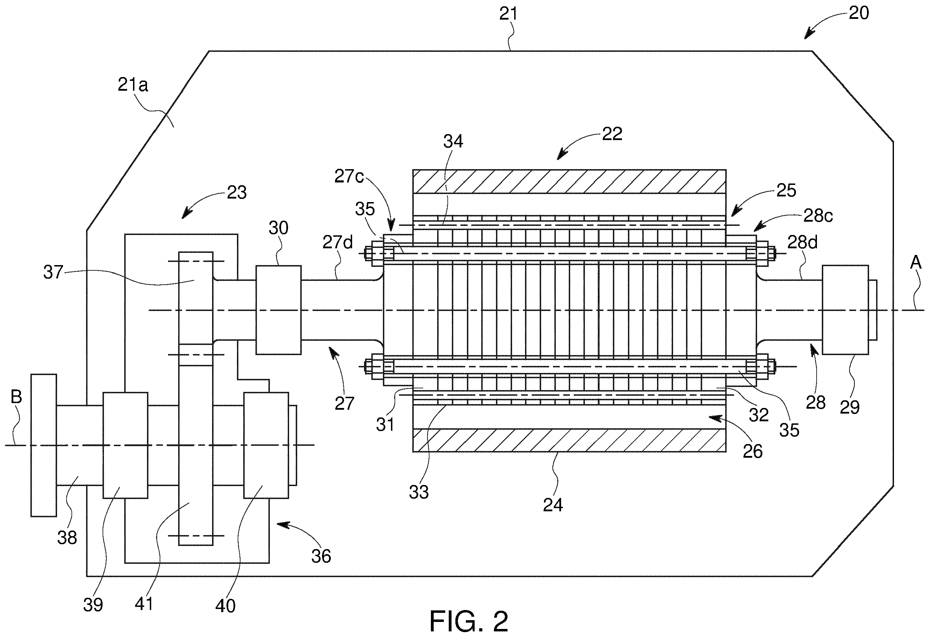

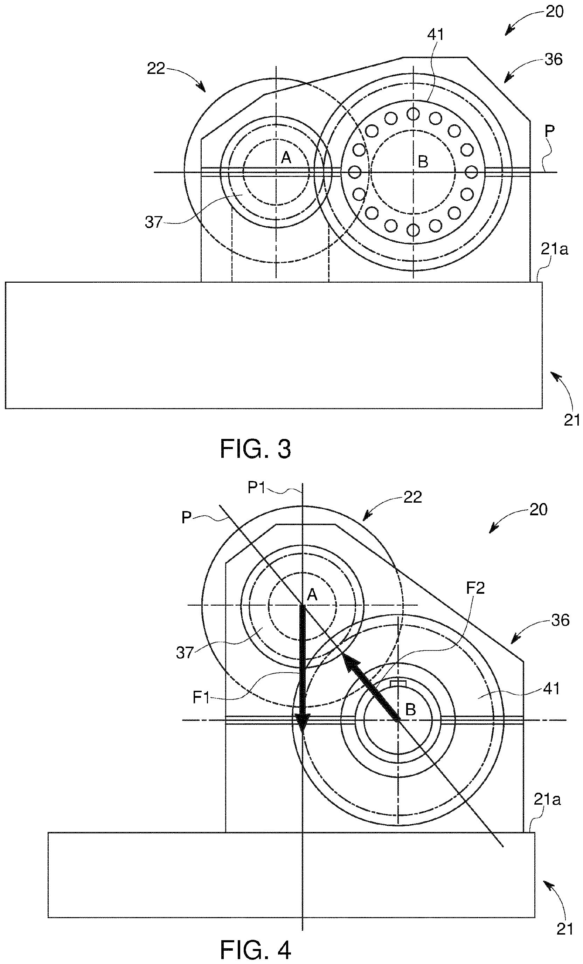

On se réfère aux figures 2 et 3 qui illustrent une coupe partielle et une vue partielle d'un premier mode de réalisation d'un système d'entraînement mécanique 20 comprenant un châssis 21, une machine électrique tournante 22 et une boîte de transfert 23 disposées sur une base 21a du châssis.

La machine électrique tournante 22 du type asynchrone à cage d'écureuil et comprend un stator 24 dans lequel est inséré un rotor 25 comprenant un arbre non traversant d'axe central A.

En variante, la machine électrique tournante 22 peut être une machine du type asynchrone à rotor bobiné ou synchrone, de préférence à rotor bobiné dont l'alimentation du rotor se fait de préférence par l'intermédiaire de bagues et balais.

Le rotor 25 à arbre non traversant comprend une masse magnétique cylindrique 26 enserrée par deux demi-arbres 27 et 28 formant un arbre rotorique.

Les demi-arbres 27 et 28 comprennent chacun une bride de fixation 27c et 28c reliée à une extrémité de la masse magnétique 26 et un arbre de transmission 27d et 28d.

Les demi-arbres 27 et 28 sont obtenus par exemple par forgeage ou moulage et sont par exemple réalisés en acier.

Chaque arbre de transmission 27d et 28d est soutenu en rotation par un palier 29, 30.

La masse magnétique 26 comprend deux disques de court-circuit 31 et 32 enserrant des tôles magnétiques compactées 33 et des barres conductrices 34 logées dans les tôles magnétiques 33 et les disques de court-circuit 31 et 32 de sorte les disques de court-circuit 31 et 32 et les barres conductrices 34 forment une cage d'écureuil.

Les tôles magnétiques 33 sont préférentiellement d'épaisseur inférieure à 2 mm, par exemple 0.65 mm ou 0.5 mm.

En variante, la masse magnétique 26 comprend un empilement de plaques métalliques, l'épaisseur des plaques métalliques étant de préférence supérieure à 5% du diamètre extérieur de la masse magnétique 26.

Selon encore une autre variante, la masse magnétique 26 comprend un corps monobloc en acier.

Des tirants 35 sont répartis uniformément sur un diamètre de la masse magnétique 26 de manière à maintenir les tôles magnétiques 33 compactées entre les demi-arbres 27 et 28.

Les tirants 35 passent à travers des trous lisses disposés dans les brides de fixation 27c et 28c, et comprennent à chaque extrémité un écrou de manière à maintenir les tôles magnétiques 33 compactées.

La boîte de transfert 23 comporte un carter 36 comportant une roue dentée motrice 37 solidaire de l'arbre de transmission 27d, un arbre de sortie 38 comprenant un axe central B et soutenu en rotation par des paliers 39 et 40, et une roue dentée entraînée 41 entre les deux paliers 39 et 40 solidaire de l'arbre de sortie 38.

Les axes A et B sont disposés dans un plan P sensiblement parallèle à la base 21a du châssis.

La roue dentée motrice 37 est engrenée avec la roue dentée entraînée 41 de sorte que l'arbre rotorique de la machine électrique tournante 22 entraîne l'arbre de sortie 38.

Selon le rapport du nombre de dents des roues dentées motrice 37 et entraînée 41, le couple et/ou la vitesse de l'arbre de sortie 38 sont augmentés ou diminués par rapport aux couple et vitesse de l'arbre rotorique.

Bien entendu, la boîte de transfert 23 peut comporter plus d'une roue dentée entraînée et plus d'une roue dentée motrice.

Comme la machine électrique tournante 22 et la boîte de transfert 23 sont disposées sur un même châssis et la roue motrice dentée 37 est solidaire du rotor de la machine électrique tournante 22, les dispositifs d'accouplement flexible disposés entre la machine électrique et la boîte de transfert ainsi que l'arbre d'accouplement sont supprimés.

Par conséquent, le nombre de paliers est diminué, un seul palier 30 étant nécessaire pour soutenir en rotation la roue dentée motrice 37 et le demi-arbre 27 du rotor 25.

Comme les paliers génèrent des pertes par friction, le rendement global de la ligne de transmission motrice comprenant le rotor 25, les paliers 29 et 30, et la roue motrice dentée 37 est augmenté.

De plus, la suppression des dispositifs d'accouplement flexible et la réduction du nombre de paliers permettent de réduire la longueur du système d'entraînement mécanique 20 selon l'axe A et de diminuer la masse de la ligne de transmission motrice.

Une telle ligne de transmission motrice possède moins de modes propres/vitesses critiques qu'une ligne de transmission motrice connue de l'état de la technique. En outre, l'arbre rotorique étant non traversant la vitesse périphérique du rotor 25 peut atteindre des valeurs supérieures à 200 m/s. La plage d'utilisation en vitesse du système d'entraînement mécanique 20 est donc plus étendue que celle d'un système d'entraînement mécanique connu de l'état de la technique.

Le demi-arbre 27 et la roue dentée motrice 37 sont réalisés d'un seul tenant.

Par conséquent, le demi-arbre 27 et la roue dentée motrice 37 peuvent transmettre par continuité de matière un couple de valeur plus élevée que dans le cas d'une roue dentée motrice rapportée sur le demi-arbre 27 et solidarisée au demi-arbre par exemple par frettage ou clavetage.

Le demi-arbre 27 et la roue dentée motrice 37 sont obtenus par exemple par forgeage ou moulage, puis par usinage et sont par exemple réalisés en acier.

Comme le demi-arbre 27 est moins lourd et moins long qu'un rotor massif ou qu'un arbre traversant la masse magnétique du rotor, l'usinage de la roue dentée motrice 37 d'un seul tenant est facilité, notamment les opérations de manutention du demi-arbre 27 comprenant la roue dentée motrice 37 avant et après l'opération d'usinage.

Selon un autre mode de réalisation, lorsque le couple à transmettre est inférieur au couple maximal transmissible par une roue dentée motrice rapportée sur le demi-arbre 27, la roue dentée motrice 37 trouée en son centre est montée sur le demi-arbre 27 par exemple par frettage, par clavetage ou par frettage hydraulique de la roue dentée motrice 37 sur une extrémité conique de l'arbre.

Toutefois la vitesse de rotation est moins élevée que dans le cas d'une roue dentée motrice d'un seul tenant avec le demi-arbre de manière à limiter la concentration des contraintes dans le trou central de la roue dentée motrice rapportée générées par la force centrifuge lorsque le rotor est en rotation.

On se réfère à la figure 4 qui illustre une vue partielle d'un deuxième mode de réalisation du système d'entraînement mécanique 20.

Ce mode de réalisation du système d'entraînement mécanique 20 diffère du mode de réalisation illustré à la figure 3 en ce que le plan P des axes de rotation A et B de la roue dentée motrice 37 et de la roue dentée entraînée 41 forme un angle avec la base 21a du châssis 21 compris entre 30° et 60°.

On a illustré les efforts résultants F1 et F2 sur les paliers 30, 39 et 40, respectivement dans un plan P1 perpendiculaire à la base 21a et dans le plan P.

Dans cette configuration des axes de rotation A et B, la composante des efforts F1 et F2 s'exerçant perpendiculairement à la base 21a se compensent partiellement réduisant l'effort subi par le palier 30.

Comme les efforts subis par les paliers sont diminués, les paliers peuvent être dimensionnés pour des efforts moins importants. Ils peuvent par exemple être de dimension réduite, réduisant encore plus l'encombrement du système de transmission 20.

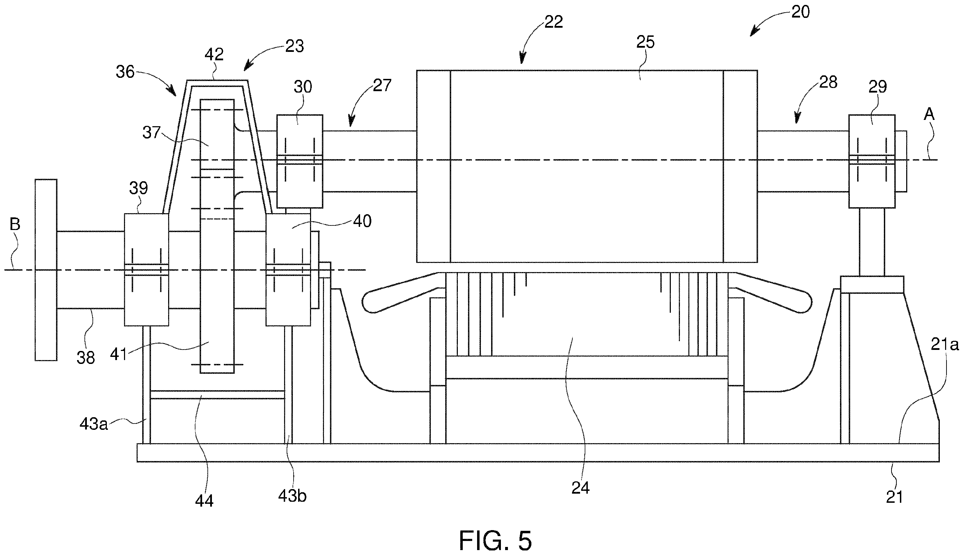

Dans un mode de réalisation, illustré à la figure 5 le carter 36 de la boîte de transfert 23 peut être formé par des éléments 42 43a, 43b et 44 du châssis 21 de sorte que la boîte de transfert 23 est intégrée dans le châssis 21.

Comme le carter 36 est intégré au châssis 21, la masse du système 20 est encore plus réduite.

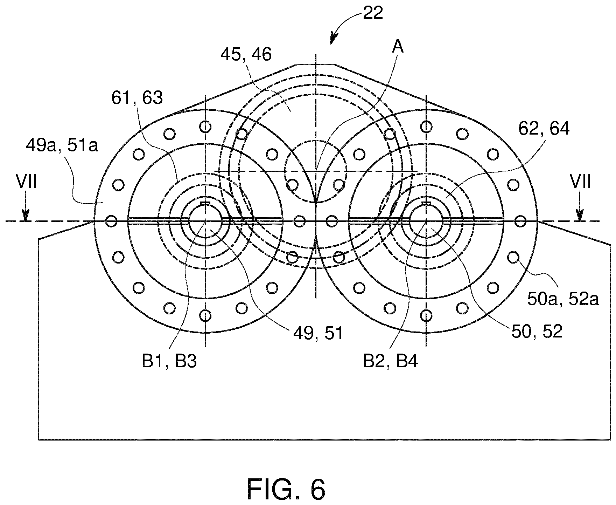

On se réfère aux figures 6 et 7 qui illustrent une vue latérale et une coupe partielle selon un direction VII-VII d'un quatrième mode de réalisation du système d'entraînement mécanique 20 comprenant la machine électrique tournante 22 comprenant les deux demi-arbres 27 et 28 soutenus en rotation par les paliers 29 et 30, les demi-arbres 27 et 28 ayant à leur extrémité libre une roue dentée motrice 45 et 46.

On se réfère plus particulièrement à la figure 7.

Le système 20 comprend en outre deux boîtes de transfert 47 et 48, de préférence identiques.

La machine électrique tournante 22 et les boîtes de transfert 47 et 48 sont disposées sur la base 21a du châssis 21.

Chaque boîte de transfert 47, 48 comprend un carter 47a, 48a comportant la roue dentée motrice 45, 46, deux arbres de sortie 49, 50, 51, 52 comprenant chacun un axe central B1, B2, B3, B4 et soutenus en rotation par des paliers 53 à 60, et une roue dentée entraînée 61, 62, 63, 64 solidaire chacune avec un arbre de sortie 49, 50, 51, 52 différent entre deux paliers 53 à 60, chaque roue dentée entraînée étant engrenée avec une roue dentée motrice 45 ou 46.

La machine électrique tournante 22 est dimensionnée pour entraîner quatre dispositifs consommateurs de puissance mécanique reliés chacun à l'un des arbres de sortie 49, 50, 51, 52 par l'intermédiaire d'une bride de fixation 49a, 50a, 51a, 52a.

Généralement, le rendement d'une machine électrique est meilleur pour une machine de grande puissance.

Par conséquent, le système 20 a un meilleur rendement global qu'un système comprenant deux ou quatre machines électriques tournantes entraînant chacune deux ou quatre dispositifs consommateurs de puissance mécanique pour une puissance consommée identique.

De plus, l'emploi d'une seule machine tournante électrique tournante permet de réduire l'encombrement du système 20.

En outre, le poids du rotor 25 s'exerçant sur les paliers 29 et 30 est partiellement compensé par les composantes perpendiculaires à la base 21a des efforts provenant des roues dentées 61 à 64 dans les plans inclinés passant par les axes B1 et A, B2 et A, B3 et A, B4 et A.

En variante, les boîtes de transfert 47 et 48 sont intégrées dans le châssis 21. La suppression des carters 47a et 48a permet de réduire la masse du système 20.

Selon une autre variante, le système 20 comprend une seule boîte de transfert permettant d'entraîner deux dispositifs consommateurs de puissance mécanique.

Dans les modes de réalisation précédents, les roues dentées motrices et entraînées sont droites de manière à former des engrenages parallèles.

En variante, les roues dentées motrices et entraînées sont coniques de manière à former des engrenages concourants, permettant de réduire encore plus l'encombrement du système 20 selon l'axe A.

Les figures 8 et 9 illustrent une vue et une coupe partielle selon une direction IX-IX d'un cinquième mode de réalisation du système d'entraînement mécanique 20 comprenant la machine tournante électrique 22 comprenant les deux demi-arbres 27 et 28 soutenus en rotation par les paliers 29 et 30, les demi-arbres 27 et 28 ayant à leur extrémité une roue dentée motrice conique 65 et 66, et deux boîtes de transfert 67 et 68, de préférence identiques.

Le châssis 21 forme trois caissons 21b, 21c, 21d disposés sur sa base 21a, la machine électrique tournante 22 étant disposée dans le premier caisson 21b, la première boîte de transfert 67 et la deuxième boîte de transfert 68 étant respectivement disposées dans le deuxième et troisième caissons 21c et 21d.

Chaque caisson 21b, 21c et 21d, et le châssis 21 sont étanches.

Chaque boîte de transfert 67 et 68 comprend la roue dentée motrice 65, 66, deux arbres de sortie 69, 70, 71, 72 comprenant chacun un axe central C1, C2, C3, C4 et soutenu en rotation par des paliers 73 à 80, et une roue dentée entraînée conique 81 à 84 solidaire chacune d'une extrémité d'un arbre de sortie 69, 70, 71, 72, chaque roue dentée conique entraînée étant engrenée avec une roue dentée conique motrice 65, 66 de manière à former des engrenages concourants.

L'axe de rotation A de chaque roue dentée conique motrice 65, 66 et l'axe de rotation C1 à C4 de chaque roue dentée entraînée 81 à 84 sont perpendiculaires ou sensiblement perpendiculaires.

La configuration des boîtes de transfert 67 et 68 permet de disposer des dispositifs consommateurs de puissance mécanique perpendiculairement à l'axe de rotation A de la machine électrique tournante 22 afin d'optimiser l'encombrement du système 20, notamment en longueur selon l'axe A, et des dispositifs consommateurs reliés aux arbres de sortie 69 à 72.

Les dispositifs consommateurs sont reliés chacun à l'un des arbres de sortie 69, 70, 71, 72 par l'intermédiaire d'une bride de fixation 69a, 70a, 71a, 72a.

Selon une autre variante, le système 20 comprend une seule boîte de transfert permettant d'entraîner deux dispositifs consommateurs de puissance mécanique.

En variante, les paliers 30 et 29 soutenant les demi-arbres 27 et 28 et les arbres de sortie 69 à 72 sont équipés de joints de sorte que les caissons 21b, 21c et 21d soient étanches.

Selon encore une autre variante, les roues dentées coniques et les paliers des boîtes de transfert 67, 68 sont incorporés dans un carter formé par le châssis 21 ne comprenant pas de caissons et la machine électrique tournante 22 est disposée sur la base du châssis 21a.

Selon encore une autre variante, les boîtes de transfert 67, 68 comprennent chacune un carter incorporant les roues dentées coniques et les paliers, la machine électrique tournante 22 et les boîtes de transfert 67 et 68 étant disposées sur la base du châssis 21a.

Les figures 10 et 11 illustrent une vue et une coupe partielle selon une direction XI-XI d'un sixième mode de réalisation du système d'entraînement mécanique 20.

Ce mode de réalisation du système d'entraînement mécanique 20 diffère du mode de réalisation illustré aux figures 8 et 9 en ce que l'axe A de chaque roue dentée conique motrice 65, 66 et les axes C1 à C4 des roues dentées coniques entraînées 81 à 84 forment un angle compris entre 5° et 45°, de préférence compris entre 10° et 30°.

La configuration des boîtes de transfert 67 et 68 permet de disposer des dispositifs consommateurs de puissance mécanique décalés angulairement par rapport à l'axe de rotation A de la machine électrique tournante 22 afin d'optimiser l'encombrement du système 20 et des dispositifs consommateurs reliés aux arbres de sortie 69 à 72. L'angle formé entre les axes non parallèles C1 et C2, ou C3 et C4, permet d'écarter angulairement les dispositifs consommateurs afin de créer un espace de maintenance autour de ceux-ci. Les dispositifs consommateurs sont reliés par l'intermédiaire des brides de fixation 69a à 72a.

Dans les modes de réalisation décrits précédemment, chaque système d'entraînement mécanique 20 comprend une machine électrique tournante 22.

Selon d'autres modes de réalisation, le système 20 comprend une boîte de transfert entraînée par deux machines électriques tournantes.

La figure 12 illustre une coupe partielle d'un septième mode de réalisation du système d'entraînement mécanique 20 comprenant deux machines électriques tournantes 22a et 22b identiques à la machine électrique tournante 22, et une boîte de transfert 85 disposées sur la base 21a du châssis 21.

Les machines électriques tournantes 22a et 22b comprennent un stator 24a, 24b, un rotor 25a, 25b à arbre non traversant d'axe central A1, A2 et comprenant deux demi-arbres 27a, 28a, 27b, 28b soutenus en rotation par des paliers 29a, 30a, 29b, 30b.

L'extrémité libre du demi-arbre 27a, 27b du rotor 25a, 25b comporte une roue dentée droite motrice 86, 87.

La boîte de transfert 85 comporte un carter 88 comportant les roues dentées droites motrices 86 et 87, un arbre de sortie 89 comprenant un axe central D et soutenu en rotation par des paliers 90 et 91, et une roue dentée droite entraînée 92 fixée entre les deux paliers 90 et 91 sur l'arbre de sortie 89, les roues dentées droites motrices 86 et 87 étant engrenées avec la roue dentée droite entraînée 92.

Le système d'entraînement mécanique 20 comprenant deux machines électriques tournantes 22a, 22b reliées à l'arbre de sortie 89 permet d'entraîner un dispositif consommateur de très grande puissance ne pouvant être entraîné par une seule machine électrique tournante.

En variante, la boîte de transfert 85 est intégrée dans le châssis 21. La suppression du carter 88 permet de réduire la masse du système 20.

En variante, les roues dentées sont coniques créant un angle entre les axes A1 et A2 non parallèles, permettant ainsi par exemple de réduire l'encombrement latéral de la boîte de transfert 85, ou d'augmenter l'espace entre les deux stators 24a, 24b à l'opposé de la boîte de transfert 85.

Selon encore une autre variante, le système 20 comprend une deuxième boîte de transfert similaire à la première boîte de transfert 85, les extrémités libres des demi-arbres 28a, 28b des rotors 25a, 25b étant chacune pourvue d'une roue dentée motrice entraînant un arbre de sortie de la deuxième boîte de transfert.

Selon encore une autre variante, comme illustré à la figure 4, un premier plan des axes de rotation de la roue dentée motrice 86 et de la roue dentée entraînée 92 et un deuxième plan des axes de rotation de la roue dentée motrice 87 et de la roue dentée entraînée 92 forment respectivement un angle avec la base 21a du châssis 21 compris entre 30° et 60°.

Deux dispositifs consommateurs de puissance mécanique sont entraînés par le système 20 réduisant l'encombrement par rapport à l'utilisation de deux systèmes d'entraînement entraînant chacun un dispositif consommateur de puissance mécanique.

La figure 13 illustre une coupe partielle d'un huitième mode de réalisation du système d'entraînement mécanique 20 comprenant les machines électriques tournantes 22a et 22b comprenant les demi-arbres 27a, 28a, 27b, 28b soutenus en rotation par les paliers 29a, 30a, 29b, 30b et une boîte de transfert 93 comprenant l'arbre de sortie 89 soutenu en rotation par les paliers 90 et 91.

Ce mode de réalisation du système 20 diffère du mode de réalisation illustré à la figure 12 en ce que le châssis 21 forme trois caissons étanches 21e, 21f, 21g disposés sur sa base 21a, les machines électriques tournantes 22a étant disposées respectivement dans un premier caisson 21e et un deuxième caisson 21f, et la boîte de transfert 93 étant disposée dans un troisième caisson 21g, et diffère en ce que la boîte de transfert 93 comprend deux roues dentées coniques motrices 94 et 95 reliées aux extrémités libres des demi-arbres 27a et 27b, les deux roues dentées coniques motrices 94 et 95 étant engrenées avec une roue dentée conique entraînée 96 sur l'arbre de sortie 89 disposée entre les deux paliers 90 et 91.

Les axes A1 et A2 sont inclinés d'un angle compris entre 5 et 45°, de préférence compris entre 10 et 30° avec l'axe de la roue dentée entraînée 96.

Le premier caisson 21e et le deuxième caisson 21f comprennent des couvercles étanches 21h et 21i pour rendre étanches les paliers 29a et 29b. Le châssis 21 comprenant les trois caissons 21e, 21f, 21g est étanche. Le troisième caisson 21g comprend une bride de fixation 89a de manière à entraîner un dispositif consommateur de puissance mécanique fixé sur la bride 89a.

En variante, la boîte de transfert 93 comprend des roues dentées droites de manière à former des engrenages parallèles, les axes A1, A2 des rotors 25a, 25b étant parallèles.

La figure 14 illustre un motocompresseur 97 comprenant le système d'entraînement mécanique 20 tel qu'illustré à la figure 13, un boîtier étanche 98 fixé au châssis 21, le boîtier 98 comprenant une section de compression 99 comprenant une entrée 100 et une sortie 101.

Le boîtier 98 et le châssis 21 sont fixés ensemble par l'intermédiaire de la bride de fixation 89a et forment un ensemble étanche. Les machines électriques tournantes 22a, 22b et la section de compression 99 sont soumises à une pression intérieure par exemple de 40 bar à 150 bar.

La section de compression 99 comprend en outre un arbre d'entrée 102 relié à l'arbre de sortie 89 de la boîte de transfert 93 de sorte que des roues de compression incorporées dans la section 99 sont entraînées par les machines électriques tournantes 22a et 22b de manière à comprimer par exemple un gaz à l'entrée 100.

Le système d'entraînement mécanique 20 comprenant deux machines électriques tournantes 22a, 22b permet d'entraîner une section de compression 99 de très grande puissance ne pouvant pas être entraînée par une seule machine électrique tournante.

Les modes de réalisation des systèmes d'entraînement mécanique décrits précédemment ont une masse réduite et un encombrement réduit par rapport aux systèmes connus de l'état de la technique.

De plus, les modes de réalisation des systèmes d'entraînement mécanique décrits permettent de transmettre un couple et/ou une vitesse de rotation plus importants et améliorent le rendement global desdits systèmes.

En outre, les modes de réalisation décrits permettent d'adapter la configuration des systèmes selon le nombre de dispositifs consommateurs et l'encombrement disponible.

Les modes de réalisation du système 20 décrits aux figures 8, 9, 10, 11 et 13 sont particulièrement adaptés pour une utilisation dans le motocompresseur 97. Le châssis 21 comprenant plusieurs caissons étanches et fixé à une ou plusieurs sections de compression, forment un ensemble motocompresseur étanche à la pression intérieure en provenance des roues de compression permettant de réduire les fuites par exemple de gaz vers l'atmosphère environnante en comparaison d'une machine électrique tournante et d'une section de compression séparées par un arbre d'accouplement présentant des fuites par exemple de gaz au niveau des joints de l'arbre d'entrée du compresseur.

Dans les modes de réalisation décrits précédemment, les machines électriques tournantes fonctionnent en mode moteur.

Bien entendu, les machines électriques tournantes peuvent fonctionner en mode génératrice pour produire une puissance électrique.

Dans ce mode de fonctionnement, le système 20 est entraîné par un dispositif producteur de puissance mécanique, comme par exemple une turbine à gaz ou une turbine à vapeur. La ou les roues dentées entraînées entraînent la ou les roues dentées motrices de manière à entraîner la ou les machines électriques tournantes.

## Revendications

1. Système d'entraînement mécanique (20) comprenant un châssis (21), au moins une machine électrique tournante (22, 22a, 22b) comprenant un rotor à arbre non traversant (25, 25a, 25b) disposée sur le châssis, et au moins une boîte de transfert (23, 47, 48, 67, 68, 85, 93) comportant au moins une roue dentée motrice (37, 45, 46, 65, 66, 86, 87, 94, 95), la roue dentée motrice étant solidaire d'un arbre rotorique de la machine électrique tournante, la boîte de transfert étant disposée sur le châssis, **caractérisé en ce que** le rotor à arbre non traversant (25) comporte une masse magnétique cylindrique (26) enserrée entre deux demi-arbres (27, 27a, 27b, 28, 28a, 28b), les demi-arbres formant l'arbre rotorique.

2. Système d'entraînement mécanique selon la revendication 1, dans lequel le demi-arbre (27, 27a, 27b, 28, 28a, 28b) et la roue dentée motrice (37, 45, 46, 65, 66, 86, 87, 94, 95) sont réalisés d'un seul tenant.

3. Système d'entraînement mécanique selon l'une quelconque des revendications 1 à 2, dans lequel la boîte de transfert (23, 47, 48, 67, 68, 85, 93) comprend un carter (36, 47a, 48a, 21c, 21d, 21g, 88) formé par des éléments du châssis de sorte que la boîte de transfert soit intégrée dans le châssis (21).

4. Système d'entraînement mécanique selon l'une quelconque des revendications 1 à 3, dans lequel la boîte de transfert (23, 47, 48, 67, 68, 85, 93) comprend en outre au moins une roue dentée entraînée (41, 61, 62, 63, 64, 81, 82, 83 84, 92, 96) reliée à un arbre de sortie (38, 49, 50, 51, 52, 69, 70, 71, 72, 89) de ladite boîte, la roue dentée entraînée étant engrenée avec la roue dentée motrice, un plan (P) des axes de rotation (A, B) de la roue dentée motrice (37, 45, 46, 65, 66, 86, 87, 94, 95) et de la roue dentée entraînée (41) forme un angle avec la base (21a) du châssis (21) compris entre 30° et 60°.

5. Système d'entraînement mécanique selon l'une quelconque des revendications 1 à 4, dans lequel la boîte de transfert (47, 48, 67, 68) comprend en outre au moins deux roues dentées entraînées (61, 62, 63, 64, 81, 82, 83, 84) reliées chacune à un arbre de sortie (49, 50, 51, 52, 69, 70, 71, 72) de ladite boîte, chacune des roues dentées entraînées étant engrenée avec la roue dentée motrice.

6. Système d'entraînement mécanique selon l'une des revendications 1 à 5, comprenant en outre une deuxième boîte de transfert (48, 68) disposée sur la base (21a) du châssis (21), la deuxième extrémité du rotor (25) comportant la roue dentée motrice (46, 66) de la deuxième boîte de transfert.

7. Système d'entraînement mécanique selon l'une quelconque des revendications 1 à 4, comportant en outre une deuxième machine électrique tournante (22b) comprenant un rotor à arbre non traversant (25b) disposée sur la base (21a) du châssis (21), au moins une extrémité d'un arbre rotorique de la deuxième machine électrique tournante comportant une deuxième roue dentée motrice (87, 95) de la boîte de transfert (85, 93).

8. Système d'entraînement mécanique selon la revendication 7, dans lequel la boîte de transfert (85, 93) comprend en outre au moins une roue dentée entraînée (92, 96) reliée à un arbre de sortie (89) de ladite boîte, la roue dentée entraînée étant engrenée avec les roues dentées motrices, un premier plan des axes de rotation de la roue dentée motrice (86, 64) et de la roue dentée entraînée (92, 96), et un deuxième plan des axes de rotation de la deuxième roue dentée motrice (87, 95) et de la roue dentée entraînée (92, 96) forment respectivement un angle avec la base (21a) du châssis (21) compris entre 30° et 60°.

9. Système d'entraînement mécanique selon l'une des revendications 7 et 8, comprenant une deuxième boîte de transfert selon la première boîte de transfert (85, 93), les extrémités libres des demi-arbres (28a, 28b) des rotors (25a, 25b) des machines électriques tournantes étant chacune pourvue d'une roue dentée motrice entraînant un arbre de sortie de la deuxième boîte de transfert.

10. Système d'entraînement mécanique selon l'une quelconque des revendications 4 à 9, dans lequel les roues dentées (37, 41, 45, 46, 61, 62, 63, 64, 86, 87, 92) sont droites de manière à former des engrenages parallèles.

11. Système d'entraînement mécanique selon l'une quelconque des revendications 4 à 9, dans lequel les roues dentées (65, 66, 81, 82, 83, 84, 94, 95, 96) sont coniques de manière à former des engrenages concourants.

12. Système d'entraînement mécanique selon la revendication 11, dans lequel un axe de rotation (A) de chaque roue dentée motrice (65, 66) et un axe de rotation (C1, C2, C3, C4) de chaque roue dentée entraînée (81, 82, 83, 84) sont sensiblement perpendiculaires.

13. Système d'entraînement mécanique selon la revendication 11, dans lequel un axe de rotation (A, A1, A2) de chaque roue dentée motrice (65, 66, 94, 95) et un axe de rotation (C1, C2, C3, C4, D) de chaque roue dentée entraînée (81, 82, 83, 84, 96) forment un angle compris entre 5° et 45°, de préférence compris entre 10° et 30°.

14. Système d'entraînement mécanique selon l'une quelconque des revendications 1 à 13, dans lequel chaque machine électrique tournante (22, 22a, 22b) et chaque boîte de transfert (67, 68, 93) sont disposées dans un caisson étanche (21b, 21c, 21d, 21e, 21f, 21g) différent formé par le châssis (21).

15. Motocompresseur (97) comprenant un système d'entraînement mécanique selon l'une des revendications 1 à 15, entraînant une section de compression (99) du motocompresseur.

## Patentansprüche

1. Mechanisches Antriebssystem (20), umfassend ein Gestell (21), mindestens eine auf dem Gestell angeordnete drehende elektrische Maschine (22, 22a, 22b), die einen Rotor mit nichtdurchgehender Welle (25, 25a, 25b) umfasst, und mindestens ein Verteilergetriebe (23, 47, 48, 67, 68, 85, 93), das mindestens ein verzahntes Antriebsrad (37, 45, 46, 65, 66, 86, 87, 94, 95) umfasst, wobei das verzahnte Antriebsrad mit einer Rotorwelle der drehenden elektrischen Maschine fest verbunden ist, wobei das Verteilergetriebe auf dem Gestell angeordnet ist, **dadurch gekennzeichnet, dass** der Rotor mit nichtdurchgehender Welle (25) eine zylindrische Magnetmasse (26) umfasst, die zwischen zwei Halbwellen (27, 27a, 27b, 28, 28a, 28b) eingeschlossen ist, wobei die Halbwellen die Rotorwelle bilden.

2. Mechanisches Antriebssystem nach Anspruch 1, wobei die Halbwelle (27, 27a, 27b, 28, 28a, 28b) und das verzahnte Antriebsrad (37, 45, 46, 65, 66, 86, 87, 94, 95) aus einem einzigen Teil hergestellt sind.

3. Mechanisches Antriebssystem nach einem der Ansprüche 1 bis 2, wobei das Verteilergetriebe (23, 47, 48, 67, 68, 85, 93) ein Gehäuse (36, 47a, 48a, 21c, 21d, 21g, 88) umfasst, das derart aus Gestellelementen gebildet ist, dass das Verteilergetriebe im Gestell (21) integriert ist.

4. Mechanisches Antriebssystem nach einem der Ansprüche 1 bis 3, wobei das Verteilergetriebe (23, 47, 48, 67, 68, 85, 93) weiter mindestens ein verzahntes angetriebenes Rad (41, 61, 62, 63, 64, 81, 82, 83 84, 92, 96) umfasst, das mit einer Ausgangswelle (38, 49, 50, 51, 52, 69, 70, 71, 72, 89) des Getriebes verbunden ist, wobei das verzahnte angetriebene Rad mit dem verzahnten Antriebsrad in Eingriff steht, wobei eine Ebene (P) der Drehachsen (A, B) des verzahnten Antriebsrads (37, 45, 46, 65, 66, 86, 87, 94, 95) und des verzahnten angetriebenen Rads (41) mit der Basis (21a) des Gestells (21) einen Winkel zwischen 30° und 60° bildet.

5. Mechanisches Antriebssystem nach einem der Ansprüche 1 bis 4, wobei das Verteilergetriebe (47, 48, 67, 68) weiter mindestens zwei verzahnte angetriebene Räder (61, 62, 63, 64, 81, 82, 83, 84) umfasst, die jeweils mit einer Ausgangswelle (49, 50, 51, 52, 69, 70, 71, 72) des Getriebes verbunden sind, wobei jedes der verzahnten angetriebenen Räder mit dem verzahnten Antriebsrad in Eingriff steht.

6. Mechanisches Antriebssystem nach einem der Ansprüche 1 bis 5, weiter ein zweites Verteilergetriebe (48, 68) umfassend, das auf der Basis (21a) des Gestells (21) angeordnet ist, wobei das zweite Ende des Rotors (25) das verzahnte Antriebsrad (46, 66) des zweiten Verteilergetriebes umfasst.

7. Mechanisches Antriebssystem nach einem der Ansprüche 1 bis 4, weiter eine zweite, einen Rotor mit nichtdurchgehender Welle (25b) umfassende, drehende elektrische Maschine (22b) umfassend, die auf der Basis (21a) des Gestells (21) angeordnet ist, wobei mindestens ein Ende einer Rotorwelle der zweiten drehenden elektrischen Maschine ein zweites verzahntes Antriebsrad (87, 95) des Verteilergetriebes (85, 93) umfasst.

8. Mechanisches Antriebssystem nach Anspruch 7, wobei das Verteilergetriebe (85, 93) weiter mindestens ein verzahntes angetriebenes Rad (92, 96) umfasst, das mit einer Ausgangswelle (89) des Getriebes verbunden ist, wobei das verzahnte angetriebene Rad mit den verzahnten Antriebsrädern in Eingriff steht, wobei eine erste Ebene der Drehachsen des verzahnten Antriebsrads (86, 64) und des verzahnten angetriebenen Rads (92, 96), und eine zweite Ebene der Drehachsen des zweiten verzahnten Antriebsrads (87, 95) und des verzahnten angetriebenen Rads (92, 96) jeweils einen Winkel mit der Basis (21a) des Gestells (21) zwischen 30° und 60° bilden.

9. Mechanisches Antriebssystem nach einem der Ansprüche 7 und 8, umfassend ein zweites Verteilergetriebe gemäß dem ersten Verteilergetriebe (85, 93), wobei die freien Enden der Halbwellen (28a, 28b) der Rotoren (25a, 25b) der drehenden elektrischen Maschinen jeweils mit einem verzahnten Antriebsrad versehen sind, das eine Ausgangswelle des zweiten Verteilergetriebes antreibt.

10. Mechanisches Antriebssystem nach einem der Ansprüche 4 bis 9, wobei die verzahnten Räder (37, 41, 45, 46, 61, 62, 63, 64, 86, 87, 92) gerade sind, sodass sie parallele Verzahnungen bilden.

11. Mechanisches Antriebssystem nach einem der Ansprüche 4 bis 9, wobei die verzahnten Räder (65, 66, 81, 82, 83, 84, 94, 95, 96) konisch sind, sodass sie konkurrierende Verzahnungen bilden.

12. Mechanisches Antriebssystem nach Anspruch 11, wobei eine Drehachse (A) jedes verzahnten Antriebsrads (65, 66) und eine Drehachse (C1, C2, C3, C4) jedes verzahnten angetriebenen Rads (81, 82, 83, 84) im Wesentlichen senkrecht sind.

13. Mechanisches Antriebssystem nach Anspruch 11, wobei eine Drehachse (A, A1, A2) jedes verzahnten Antriebsrads (65, 66, 94, 95) und eine Drehachse (C1, C2, C3, C4, D) jedes verzahnten angetriebenen Rads (81, 82, 83, 84, 96) einen Winkel zwischen 5° und 45°, vorzugsweise zwischen 10° und 30° bilden.

14. Mechanisches Antriebssystem nach einem der Ansprüche 1 bis 13, wobei jede drehende elektrische Maschine (22, 22a, 22b) und jedes Verteilergetriebe (67, 68, 93) in einem verschiedenen dichten Rahmen (21b, 21c, 21d, 21e, 21f, 21g) angeordnet sind, der durch das Gestell (21) gebildet wird.

15. Motorverdichter (97), umfassend ein mechanisches Antriebssystem nach einem der Ansprüche 1 bis 15, das einen Verdichtungsabschnitt (99) des Motorverdichters antreibt.

## Claims

1. Mechanical drive system (20) comprising a frame (21), at least one rotating electrical machine (22, 22a, 22b) having a rotor with a non-through shaft (25, 25a, 25b) disposed on the frame, and at least one transfer box (23, 47, 48, 67, 68, 85, 93) comprising at least one driving gearwheel (37, 45, 46, 65, 66, 86, 87, 94, 95), the driving gearwheel being secured to a rotor shaft of the rotating electrical machine, the transfer box being disposed on the frame, **characterised in that** the rotor with a non-through shaft (25) comprises a cylindrical magnetic mass (26) sandwiched between two half-shafts (27, 27a, 27b, 28, 28a, 28b), the half-shafts forming the rotor shaft.

2. Mechanical drive system according to claim 1, in which the half-shaft (27, 27a, 27b, 28, 28a, 28b) and the driving gearwheel (37, 45, 46, 65, 66, 86, 87, 94, 95) are made of one single holding.

3. Mechanical drive system according to any one of claims 1 to 2, in which the transfer box (23, 47, 48, 67, 68, 85, 93) has a casing (36, 47a, 48a, 21c, 21d, 21g, 88) formed by elements of the frame, such that the transfer box is integrated in the frame (21).

4. Mechanical drive system according to any one of claims 1 to 3, in which the transfer box (23, 47, 48, 67, 68, 85, 93) further has at least one driving gearwheel (41, 61, 62, 63, 64, 81, 82, 83, 84, 92, 96) connected to an output shaft (38, 49, 50, 51, 52, 69, 70, 71, 72, 89) of said box, the driven gearwheel being meshed with the driving gearwheel, a plane (P) of the axes of rotation (A, B) of the driving gearwheel (37, 45, 56, 65, 66, 86, 87, 94, 95) and the driven gearwheel (41) forms an angle with the base (21a) of the frame (21) of between 30° and 60°.

5. Mechanical drive system according to any one of claims 1 to 4, in which the transfer box (47, 48, 67, 68) further has at least two driven gearwheels (61, 62, 63, 64, 81, 82, 83, 84) each connected to an output shaft (49, 50, 51, 52, 69, 70, 71, 72) of said box, each of the driven gearwheels being meshed with the driving gearwheel.

6. Mechanical drive system according to one of claims 1 to 5, further having a second transfer box (48, 68) disposed on the base (21a) of the frame (21), the second end of the rotor (25) comprising the driving gearwheel (46, 66) of the second transfer box.

7. Mechanical drive system according to any one of claims 1 to 4, further comprising a second rotating electrical machine (22b) having a rotor with a non-through shaft (25b) disposed on the base (21a) of the frame (21), at least one end of the rotor shaft of the second rotating electrical machine comprising a second driving gearwheel (87, 95) of the transfer box (85, 93).

8. Mechanical drive system according to claim 7, in which the transfer box (85, 93) further has at least one driven gearwheel (92, 96) connected to an output shaft (89) of said box, the driven gearwheel being meshed with the driving gearwheels, a first plane of the axes of rotation of the driving gearwheel (86, 64) and of the driven gearwheel (92, 96), and a second plane of the axes of rotation of the second driving gearwheel (87, 95) and of the driven gearwheel (92, 96) form respectively an angle with the base (21a) of the frame (21) of between 30° and 60°.

9. Mechanical drive system according to one of claims 7 and 8, having a second transfer box according to the first transfer box (85, 93), the free ends of the half-shafts (28a, 28b) of the rotors (25a, 25b) of the rotating electrical machines each being provided with a driving gearwheel driving an output shaft of the second transfer box.

10. Mechanical drive system according to any one of claims 4 to 9, in which the gearwheels (37, 41, 45, 46, 61, 62, 63, 64, 86, 87, 92) are straight so as to form parallel meshes.

11. Mechanical drive system according to any one of claims 4 to 9, in which the gearwheels (65, 66, 81, 82, 83, 84, 94, 95, 96) are conical so as to form convergent meshes.

12. Mechanical drive system according to claim 11, in which an axis of rotation (A) of each driving gearwheel (65, 66) and an axis of rotation (C1, C2, C3, C4) of each driven gearwheel (81, 82, 83, 84) are substantially perpendicular.

13. Mechanical drive system according to claim 11, in which an axis of rotation (A, A1, A2) of each driving gearwheel (65, 66, 94, 95) and an axis of rotation (C1, C2, C3, C4, D) of each driven gearwheel (81, 82, 83, 84, 96) form an angle of between 5° and 45°, preferably of between 10° and 30°.

14. Mechanical drive system according to any one of claims 1 to 13, in which each rotating electrical machine (22, 22a, 22b) and each transfer box (67, 68, 93) are disposed in a different sealed case (21b, 21c, 21d, 21e, 21f, 21g) formed by the frame (21).

15. Motor compressor (97) having a mechanical drive system according to one of claims 1 to 15, driving a compression section (99) of the motor compressor.
